# FASCICULE DE BREVET EUROPEEN

(11) **EP 0 803 785 B1**
(45) Date de publication et mention de la délivrance du brevet: **10.06.1998**
(21) Numéro de dépôt: 97400854.2
(22) Date de dépôt: 15.04.1997
(51) Int. Cl.: G05B 13/02

(54) **Procédé de gestion d'un système électronique**
Verfahren zur Verwaltung eines elektronischen Systems
Method for managing an electronic system

(30) Priorité: 26.04.1996 FR 9605332
(43) Date de publication de la demande: 29.10.1997
(73) Titulaire: SGS-THOMSON MICROELECTRONICS S.A., 94250 Gentilly (FR)
(72) Inventeur: Le Van Suu, Maurice, 75116 Paris (FR)
(74) Mandataire: Schmit, Christian Norbert Marie

(56) Documents cités:
- WO-A-93/09509
- INSTITUTE OF ELECTRICAL AND ELECTRONIC ENGINEERS PROCEEDINGS OF THE INTERNATIONAL CONFERENCE ON NEURAL NETWORKS, vol. 2, 7 Juin 1992, BALTIMORE, pages 757-762, XP000611751 T.FUKUDA ET AL: "multi-sensor integration system with fuzzy inference and neural networks"

## Description

La présente invention a pour objet un procédé de gestion d'un système électronique. Le système électronique dont il est question comporte essentiellement un appareil électrique commandé par un microprocesseur. Pour pouvoir commander l'appareil un microprocesseur comporte une mémoire dans laquelle, dans l'invention, est enregistré un programme de logique floue. La gestion dont il est question dans l'invention se réfère essentiellement à la mise au point, l'installation et ou la réparation du système électronique notamment à la mise au point, l'installation et ou la réparation de l'appareil.

On décrira l'invention dans le cadre de deux exemples d'utilisation domotique, la réparation du moteur d'une porte de garage, et la réparation d'un capteur de température de régulation thermique d'un radiateur ou d'un four d'une installation de chauffage domestique ou industrielle. Cette description permettra de placer l'invention dans le cadre d'une gestion en réseau des appareils. Cependant, bien que cette gestion réseau soit une application préférée de l'invention, l'invention aura son intérêt même si les appareil sont indépendants les uns des autres.

La commande d'un appareil par un programme de logique floue nécessite la mesure par un ou plusieurs capteurs de données de mesure. Ces données de mesure sont ensuite affectées à des plages de fonctionnement, de mesure, qui correspondent à une dynamique de mesure du capteur. Ces plages évaluées par des coefficients d'appartenance constituent les fonctions d'appartenance de cette mesure. On les appelle aussi univers du discours de la variable constituées par les données de mesure. En général le nombre de plages est faible: 5 plages, voire même 2 plages. La mesure effectuée peut donc être imprécise sans conduire à une commande erratique de l'appareil. Par ailleurs dans la mémoire du microprocesseur on stocke un jeu de règles du type "Si la donnée de mesure appartient à une plage donnée, Alors la commande de l'appareil doit être de tel type".

Un problème se pose lorsque l'appareil tombe en panne ou lorsque le capteur de mesure tombe en panne. En temps normal ce moteur ou ce capteur sont remplacés par des moteurs ou des capteurs identiques. Il peut arriver cependant que le moteur ou le capteur nécessaires ne soient plus disponibles. Ils sont alors remplacés par des moteurs ou des capteurs de types différents ou seulement similaires. L'adaptation de ces nouveaux organes dans l'appareil n'est pas vraiment possible simplement avec une approche traditionnelle, par logiciel. Dans le domaine de la logique floue sans changer le jeu de règles et le jeu des fonctions d'appartenance mémorisées, le modèle flou du système reste fiable. Cependant le changement d'organe de mesure ou de commande conduit à une différence de réponse du système par rapport à la dynamique de mesure. La modification ne peut alors être effectuée que si on s'est livré au préalable à une modélisation en logique floue de la modification de l'appareil due au changement du moteur, du capteur, ou autre. Cette modélisation qui impose le retour des appareil et du microprocesseur en laboratoire est en soi un problème et ne rend pas le remplacement des différents organes de l'appareil facile.

L'invention à pour objet de remédier à ce problème et d'éviter une mise au rebut des installations lorsque le remplacement de certaines pièces n'est plus possible ou lorsque leur modification les fait évoluer dans une gamme qui n'était pas prévue au départ. L'idée de l'invention est de munir le microprocesseur qui met en oeuvre la logique floue d'une commande externe par laquelle on va pouvoir commander manuellement l'appareil de manière à lui faire explorer, au moment de cette commande toute sa dynamique d'évolution. Au cours d'une phase d'apprentissage on acquiert alors, notamment dans un processeur central relié en réseau à l'appareil, des données de mesures relatives à cette exploration. Dans ce microprocesseur, ou de préférence dans ce processeur central, on élabore ensuite des fonctions d'appartenance et ou des règles modificatives. On modifie ensuite le jeu de fonctions d'appartenance ou le jeu de règles du microprocesseur de logique floue avec ces règles ou ces fonctions modificatives. Au besoin on insère un nouveau jeu de fonctions d'appartenance. On cesse ensuite la procédure d'apprentissage. Il apparait alors que l'appareil peut par la suite fonctionner exactement comme il fonctionnait avant, avec les mêmes commandes appliquées depuis l'extérieur, sans que la modification apportée conduise à une mauvaise interprétation de ces ordres extérieurs.

L'invention a donc pour objet un procédé de gestion d'un système électronique comportant un processeur central, un appareil, un microprocesseur et sa mémoire, et au moins un capteur de mesure, l'appareil étant commandé par le microprocesseur selon un programme de logique floue, dans lequel
- on élabore et on enregistre dans la mémoire du microprocesseur des fonctions d'appartenance établissant des correspondances entre des données de mesure et des coefficients d'appartenance de ces données de mesure à des plages de mesure,
- on élabore et on enregistre dans la mémoire du microprocesseur des règles de commande de cet appareil en fonction de valeurs de ces coefficients d'appartenance,
- on relève des données de mesure délivrées par le capteur,
- on calcule le résultat des règles de commande pour les données de mesure relevées,
- et on commande cet appareil en conséquence,
- on change le capteur de mesure et ou l'appareil quand il est défectueux,
caractérisé en ce que pour régler ce système électronique après ce changement,
- on fait évoluer le système entre deux points de fonctionnement identifiés,
- on relève les données de mesure correspondant à ces deux points,
- on élabore des fonctions d'appartenance et ou des règles modificatives,
- et on modifie les fonctions d'appartenance et ou les règles enregistrées en fonction de ces règles modificatives.

Les fonctions d'appartenance et les règles peuvent être modificatives, ou locales ou ponctuelles.

L'invention sera mieux comprise à la lecture de la description qui suit et à l'examen des figures qui l'accompagnent. Celles-ci ne sont données qu'à titre indicatif et nullement limitatif de l'invention. Les figures montrent:
- Figure 1: Une installation domestique dans laquelle le procédé de gestion de l'invention peut être mis en oeuvre;
- Figure 2: Un exemple de modification des fonctions d'appartenance du programme de logique floue mémorisé, consécutif au changement d'un moteur d'un appareil.

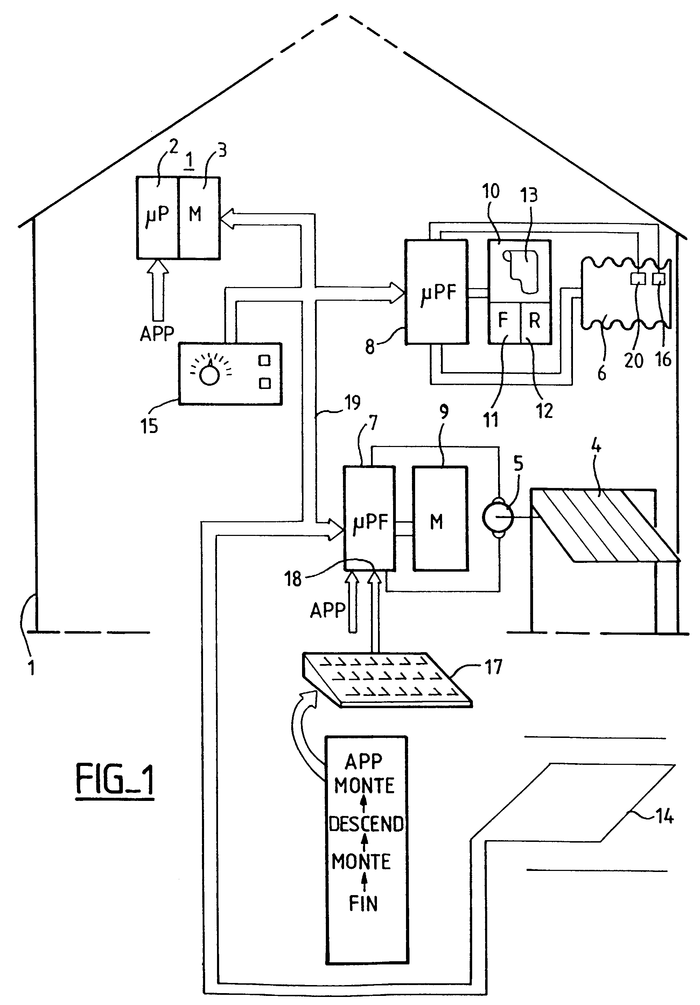

- La figure 1 montre une installation, une maison 1, dans laquelle le procédé de gestion du système électronique de l'invention va être mis en oeuvre. Le système électronique concerné comporte ici un processeur central 1 comportant une unité arithmétique logique 2 et une mémoire 3. Le système électronique comporte également un appareil: il s'agit soit d'une porte de garage 4 et de son moteur 5 d'ouverture et de fermeture. Il peut s'agir autrement d'un radiateur électrique 6. Par appareil on entend donc tout appareil électrique muni d'un organe d'action. Chaque appareil comporte un microprocesseur de logique floue, µPF, référencé respectivement 7 et 8 associé chacun à une mémoires respectivement 9 et 10. Dans les mémoires 9 et 10 sont stockés des programmes de logique floue comportant des tables 11 de fonctions d'appartenance, et des jeux 12 de règles dites aussi moteurs d'inférence. Les programmes comportent enfin un programme logique 13 organisant la lecture des tables, le calcul du résultat de l'application des règles, et l'organisation de toutes ces tâches pour commander l'appareil.

Pour commander l'appareil il existe par ailleurs des commandes externes de type pédale magnétique 14 dans le cas de l'ouverture de la porte de garage, ou de type thermostat 15 dans le cas du radiateur. Un opérateur agira sur les organes 14 et 15 de manière à imposer, au travers des microprocesseurs 7 et 8, aux appareil respectivement 4 et 6 un comportement ou une évolution donnée.

Les systèmes visés par l'invention comportent également au moins un capteur de mesure. Dans le cas du moteur 5 entraînant la porte 4 il peut y en avoir deux qui sont en pratique inclus dans le microprocesseur 7. Un premier capteur peut être tout simplement un compteur qui compte les pas du moteur 5 quand celui-ci est un moteur pas à pas. Un deuxième capteur peut être un capteur mesurant le courant qui passe dans le moteur 5. Dans ce but le microprocesseur 7 comportera un échantillonneur connecté à un fil d'alimentation du moteur 5 et en relation avec un convertisseur analogique numérique pour disposer de ce résultat de mesure sous une forme binaire. Dans le cas du radiateur 6 il y a au moins un capteur, par exemple le capteur 16 qui est une thermistance, par exemple à coefficient de température négatif (CTN). Tous ces organes sont reliés entre eux par un bus de données, d'adresses et de commandes 19.

Le fonctionnement de ces systèmes est tel que les capteurs livrent aux microprocesseurs 7 et 8 respectivement leur données de mesure. Ceux-ci leur font appliquer les programmes contenus dans les mémoire 9 et 10 et provoquent la commande du moteur 5, ou l'établissement du courant de chauffage dans le radiateur électrique 6. Les programmes mis en oeuvre par les microprocesseurs 7 et 8 sont des programmes de logique floue dont le déroulement comporte au moins le calcul d'un coefficient d'appartenance d'une donnée de mesure relevée à une plage de mesure dans la dynamique de mesure de ce capteur. Pour ce coefficient d'appartenance de cette mesure à cette plage, on calcule le résultat de règles du type SI-ALORS qui permettent d'élaborer une valeur d'un signal de commande appliqué ici soit au moteur 5 soit à un interrupteur de mise en service de la résistance de chauffage du radiateur 6. Pour simplifier les idées cette commande peut prendre l'allure d'impulsions modulées en largeur (PWM).

Le problème résolu par l'invention est celui qui résulte du changement du moteur 5 ou du capteur 16 par des organes identiques, mais dont les caractéristiques ne seraient pas bien maîtrisées ou par des organes de conception différentes. Dans l'invention on va résoudre ce problème en se lançant dans une phase d'apprentissage. Cette phase d'apprentissage sera imposée par une commande externe appliquée soit à un microprocesseur, le microprocesseur 7, soit au processeur central, le processeur 1. La commande de mise en apprentissage a pour objet de neutraliser l'action du microprocesseur 7 ou 8 en tant qu'elle s'exerce pour contrôler le comportement de l'appareil.

Par exemple cette commande peut être appliquée au microprocesseur 7 avec un clavier 17 relié temporairement à ce microprocesseur 7 sur un port d'entrée sortie 18 de ce microprocesseur 7. Il peut en être de même bien sûr sur le processeur 1 si celui-ci n'est pas déjà muni d'un clavier de commande. Avec ce clavier 17 on va lancer une série d'instructions qui permettront à l'opérateur qui manipule le clavier de faire évoluer l'appareil entre les deux points de fonctionnement de sa dynamique. Les deux points de fonctionnement peuvent être deux limites de cette dynamique.

Dans ce but, par une première opération sur le clavier 17 on lance une instruction APP par lequel le microprocesseur 7 se met en apprentissage: le microprocesseur 7 rend la main, le clavier 17 commande la manoeuvre. En agissant ainsi, le microprocesseur 7 ne traite pas les commandes issues du clavier. Celles-ci sont par exemple appliquée telles quelles au moteur 5. L'instruction APP est également transmise par le bus 19 au processeur central 1 qui va se mettre en situation d'enregistrement des données de mesure élaborée par les capteurs, y compris les signaux binaires délivrés par les convertisseurs analogiques numériques du microprocesseur 7. Au besoin le microprocesseur 7 est capable d'effectuer cet enregistrement. Puis l'opérateur lance au clavier une deuxième commande: une instruction MONTE. Dans ces conditions le moteur 5 est commuté pour permettre l'ouverture de la porte 4: pour la faire monter. Cette montée est par la suite contrôlée et commandée manuellement par l'opérateur. Celui-ci appuie pour cela sur une commande du clavier, par exemple une touche comportant une flèche verticale. Il y appuie aussi longtemps qu'il veut maintenir l'activation du moteur. L'opérateur, éventuellement par petites touches successives, amène alors la porte 4 en butée mécanique contre une de ses extrémités. Puis l'opérateur programme une instruction DESCEND. En appuyant ensuite sur une autre touche verticale, aussi longtemps que nécessaire, il referme la porte. Au cours de cette descente un compteur du microprocesseur 7 compte le nombre de pas effectués par le moteur 5 qui vient d'être commuté. De même un convertisseur analogique numérique du microprocesseur 7 délivre un signal relatif à la valeur du courant passant dans le moteur 5 au cours de cette action. Par petites touches successives, vers la fin, l'opérateur ferme la porte 4 complètement. Ce faisant on a pu avoir, mémorisé dans la mémoire du processeur 1 ou éventuellement dans la mémoire 9, le nombre de pas nécessaires au moteur 5 pour conduire l'opération de fermeture et la valeur du courant de ce moteur au cours de l'opération.

Puis l'opérateur va appliquer l'instruction MONTE, à nouveau. Il la contrôle en appuyant sur la première flèche verticale. On pourra mesurer les mêmes caractéristiques (nombre de pas, courant) pour la montée. Cependant avant de commander l'opération de montée avec la première flèche verticale de montée, l'opérateur peut appuyer sur la flèche verticale de descente (alors que la porte est déjà fermée). De cette manière il acquiert une mesure du courant qui passe dans le moteur lorsque la porte subit un blocage.

Lorsque toutes ces acquisitions sont terminées l'opérateur frappe au clavier un instruction FIN de fin. Cette instruction FIN a deux objets, d'une part elle redonne la main au microprocesseur 7, et d'autre part elle est interprétée par le processeur 1, ou le microprocesseur 7, comme une fin d'acquisition d'apprentissage. Le processeur 1 va alors maintenant calculer la modification des fonctions d'appartenance et ou des règles de composition correspondantes.

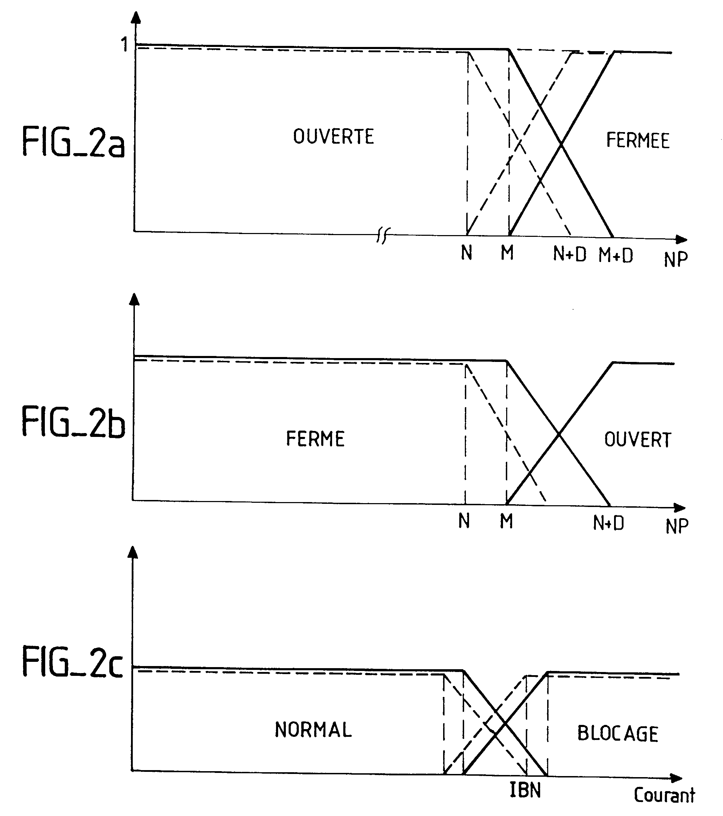

Les figures 2a à 2c montrent l'effet de cette phase d'apprentissage.

Sur la figure 2a on a fait figurer la fonction d'appartenance correspondant au nombre de pas NP effectués par le moteur pour fermer la porte. Par exemple tant que ce nombre de pas est inférieur à un nombre M on considérera que la porte est ouverte et donc la fonction d'appartenance établit une correspondance avec un coefficient d'appartenance valant 1. Lorsque ce nombre de pas devient M+D ou supérieur, on dira que le coefficient d'appartenance à la fonction d'appartenance OUVERTE est nul: la porte est fermée. Par contre le coefficient d'appartenance à la fonction d'appartenance FERME devient 1. Le fonctions d'appartenances montrées ici sont des fonctions d'appartenances en trapèze. Les coefficients d'appartenance passent linéairement de 1 à 0 ou de 0 à 1 respectivement aux fins et aux débuts de ces fonctions. On sait cependant réaliser d'autres formes, notamment des formes gaussiennes ou même triangulaires.

Le remplacement d'un ancien moteur par un nouveau moteur 5 de type différent peut conduire à ce que le nombre de pas de cet autre moteur soit différent. C'est par exemple le cas lorsque la couronne supérieure d'un moteur est plus petite que la couronne supérieur du moteur d'origine. Dans ce cas le nombre de pas comptés pour un même nombre de tours utilisés pour fermer la porte, sera inférieur. Par ailleurs il est possible de garder le même moteur et de changer tout simplement soit le système d'engrenage et sa démultiplication, soit la longueur d'un bras de levier de relevage de la porte. Ceci fait qu'en définitive le nombre de pas de la nouvelle évolution sera inférieur (ou supérieur) au précédent. A la fin de l'opération DESCEND évoquée précédemment le compteur de pas possèdera un nouveau nombre de pas N+D. Cette fin est matérialisée par le moment où on lance l'instruction MONTE. De ce nouveau nombre N+D il est possible de déduire le nouveau nombre N de limite de valeur du coefficient 1 de la fonction d'appartenance OUVERTE. Ceci suppose que ce changement n'a pas eu d'effet sur la valeur D. En première approximation ceci est exact. En agissant ainsi on est donc capable de mesurer la modification de la forme de la fonction d'appartenance. On en déduira bien entendu la modification correspondante de la fonction d'appartenance FERME relative à la fermeture de la porte. On peut, au lieu de modifier les fonctions d'appartenance, en rajouter, pour tenir compte par exemple d'une non linéarité locale du signal détecté par le capteur.

Dans ce but, cette linéarité sera d'abord mesurée en prélevant des valeurs caractéristiques de mesure en plusieurs points (par exemple choisis d'avance ou régulièrement répartis) de la dynamique d'évolution du phénomène. Ce prélèvement sera effectué par des actions lancées par l'opérateur selon un protocole qui lui aura été communiqué à l'avance. Une fois ces valeurs prélevées, le processeur 1, ou le microprocesseur 7, pourront mettre en oeuvre un programme du type WARP produit par la société SGS THOMSON MICROELECTRONICS. Ce programme est capable de définir et de calculer les fonctions d'appartenance utiles.

Sur la figure 2b on montre des mêmes opérations que celles de la figure la mais relatives à l'ouverture de la porte. On a indiqué des nombres de pas M et N comparables à ceux de la fermeture. Cependant il est tout à fait possible que le nombre de pas à l'ouverture ne soit pas le même que le nombre de pas à la fermeture.

De la même façon la figure 2c montre l'allure de la fonction d'appartenance du courant à la fermeture. Mais on aurait pu représenter la fonction d'appartenance pour l'ouverture. Dans la figure 2c les fonctions d'appartenance sont encore une fois divisées en deux, une fonction d'appartenance dite normale et une fonction d'appartenance dite blocage. Du fait de la modification du moteur et ou de la tringlerie d'actionnement, la fonction d'appartenance montrée en traits pleins devra être modifiée pour prendre la forme de celle montrée en tirets. Une nouvelle valeur du courant de blocage IBN sera mesurée alors que l'instruction MONTE est lancée et que l'opérateur appuie néanmoins sur la flèche verticale correspondant à la descente. De cette valeur de courant de blocage on peut déduire la nouvelle forme de la fonction d'appartenance du courant. Le principe de l'invention est donc de provoquer, ici avec le clavier 17, une séquence d'instructions telles qu'elles permettent d'explorer avec toutes les mesures effectuées avec l'appareil, la dynamique de variation de ces mesures. On en déduit immédiatement les nouvelles fonctions d'appartenances. Les fonction d'appartenance sont classiquement mémorisées dans les mémoires 11 sous la forme de table. Il est facile de remplacer le contenu des tables qui ont été modifiées.

Bien entendu la liste des opérations successives lancées avec le clavier 17 peut être mémorisée dans un boîtier de commande connecté sur le port 18. Avec une seule touche sur ce boîtier de commande, on peut commander l'exploration.

Ceci est par exemple particulièrement possible dans le cas du radiateur 6 pour lequel la mémoire 3 du processeur central 1 comporte un tel programme. Ce programme peut être lancé en appliquant une instruction d'apprentissage APP directement à l'unité logique et arithmétique 2 du processeur 1.

Pour ce dernier apprentissage on a, afin d'être complet, pris en considération la modification du capteur 16. Dans l'invention pour pouvoir tenir compte plus aisément du remplacement d'un capteur par un autre capteur de type différent, ou de caractéristiques différentes on a tout simplement dupliqué les capteurs de telle façon que le capteur 17 côtoie un autre capteur 20 de même type (ou ultérieurement d'un type différent). A l'origine au moment ou l'appareil a été livré les deux capteurs ont au moins des fonctions d'appartenances connues si pas identiques.

Les deux fonctions d'appartenance peuvent être identiques ou décalées l'une par rapport à l'autre. Leurs décalages sont connus. Lors du changement d'un capteur, selon l'invention, il suffit pour ce capteur changé, au cours de la séquence d'apprentissage, de mesurer les valeurs que ce capteur donne, alors que l'autre indique par ces mesures les fonctions d'appartenance dans lesquelles se trouvent le système. Par exemple s'agissant de mesures de température on aura trois fonctions d'appartenance intitulées FROID, NORMAL, CHAUD. Dans l'invention, on dira que la limite de la fonction d'appartenance FROID du nouveau capteur est atteinte lorsque le signal délivré par le capteur qui n'a pas été changé atteint sa propre limite de fonction d'appartenance FROID. On fera de même pour le début de la fonction d'appartenance NORMAL et on déduira les formes en trapèze correspondantes. Puis en allant au-delà de la fonction d'appartenance NORMAL on pourra mesurer pour le nouveau capteur quel est le signal qu'il délivre au moment ou le capteur qui n'a pas été changé indique la fin de la fonction d'appartenance NORMAL puis le début de la fonction d'appartenance CHAUD. En quelque sorte, au cours de l'opération d'apprentissage on va calibrer la dynamique d'un capteur avec la dynamique de l'autre. Il suffit pour cela d'avoir deux capteurs.

Il peut être difficile, notamment dans le cas du chauffage, d'explorer toute la dynamique. En effet, si on est en été, il est possible que la température délivrée par un capteur ne puisse pas aboutir dans la zone FROID. Dans ce cas, on peut se contenter de mesurer au moins une des limites de fonction d'appartenance d'un capteur, et de déduire par homothétie, ou par décalage arithmétique arbitraire selon le cas, les limites des autres fonctions d'appartenance pour le nouveau capteur.

Une fois que l'opération d'apprentissage est terminée, on dispose, au moins dans le processeur central 1 des nouvelles tables matérialisant les nouvelles fonctions d'appartenance du système. Par le bus 19, on télécharge alors les mémoires 9 et 10 avec les nouvelles fonctions d'appartenance. Cette opération est exécutée dès que l'opération FIN est lancée.

On voit en outre que dans le cas de la mesure de température, toute la fonction d'apprentissage peut être automatisée: on peut décider d'arrêter le chauffage avec le radiateur 6 dès que la fonction d'appartenance du capteur qui n'a pas été changé correspond à la température chaud, éventuellement avec une temporisation de quelques minutes.

Il est possible, dans certains cas que les fonctions d'appartenance ainsi mesurées aient une répartition plus complexe que l'exemple simple présenté. Par exemple dans le cas d'une balance électronique dans laquelle on aura changé un des capteur et pour lequel la linéarité de l'indicateur de mesure de poids donnée par la balance est importante on pourra être amené à changer les règles mémorisées dans les mémoires 9 et 10. Pour ce faire la procédure d'apprentissage comportera selon les séquences montrées sur la figure 1, une suite attendue d'instructions correspondant à une suite attendue d'opérations manuelles effectuées par un opérateur sur l'objet à calibrer. On sait, notamment avec le processeur WARP de la société SGS THOMSON MICROELECTRONICS est le programme associé, élaborer les fonctions d'appartenance modificatives en conséquence.

## Revendications

1. Procédé de gestion d'un système électronique comportant un processeur central, un appareil, un microprocesseur et sa mémoire, et au moins un capteur de mesure, l'appareil étant commandé par le microprocesseur selon un programme de logique floue, dans lequel
- on élabore et on enregistre dans la mémoire du microprocesseur des fonctions d'appartenance établissant des correspondances entre des données de mesure et des coefficients d'appartenance de ces données de mesure à des plages de mesure,
- on élabore et on enregistre dans la mémoire du microprocesseur des règles de commande de cet appareil en fonction de valeurs de ces coefficients d'appartenance,
- on relève des données de mesure délivrées par le capteur,
- on calcule le résultat des règles de commande pour les données de mesure relevées,
- et on commande cet appareil en conséquence,
- on change le capteur de mesure et ou l'appareil quand il est défectueux,
caractérisé en ce que pour régler ce système électronique après ce changement,
- on fait évoluer le système entre deux points de fonctionnement identifiés,
- on relève les données de mesure correspondant à ces deux points,
- on élabore des fonctions d'appartenance et ou des règles modificatives,
- et on modifie les fonctions d'appartenance et ou les règles enregistrées en fonction de ces règles modificatives.

2. Procédé selon la revendication 1, caractérisé en ce que
- on transmet les données de mesure correspondant à ces deux points au processeur central,
- le processeur central élabore les fonctions d'appartenance et ou règles modificatives,
- et le processeur central transmet ces fonctions d'appartenance et ou règles modificatives au microprocesseur.

3. Procédé selon l'une des revendications 1 à 2, caractérisé en ce que
- on munit le microprocesseur et sa mémoire d'un programme pour commander l'appareil en fonction d'instructions reçues de l'extérieur, et
- on fait évoluer le système entre deux points de fonctionnement au moyen d'un clavier de commande connecté au microprocesseur.

4. Procédé selon l'une des revendications 1 à 3, caractérisé en ce que
- on munit le microprocesseur et sa mémoire d'un programme pour commander l'appareil en fonction d'instructions reçues de l'extérieur, et
- on fait évoluer le système entre deux points de fonctionnement au moyen d'un programme enregistré dans le processeur central.

5. Procédé selon l'une des revendications 1 à 4, caractérisé en ce que
- on fait évoluer le système entre deux limites de fonctionnement.

6. Procédé selon l'une des revendications 1 à 5, caractérisé en ce que
- on relève les signaux de plusieurs capteurs.

7. Procédé selon l'une des revendications 1 à 6, caractérisé en ce que
- on duplique les capteurs pour calibrer les signaux d'un capteur en fonction des signaux d'un autre.

8. Procédé selon l'une des revendications 1 à 7, caractérisé en ce que
- on relie le processeur central au microprocesseur par un réseau local.

9. Procédé selon l'une des revendications 1 à 8, caractérisé en ce que
- on modifie localement les règles et fonctions d'appartenance.

## Patentansprüche

1. Verfahren zum Verwalten eines elektronischen Systems, das einen Zentralprozessor, ein Gerät, einen Mikroprozessor und seinen Speicher und wenigstens einen Meßfühler aufweist, wobei das Gerät durch den Mikroprozessor gemäß einem unscharfen Logikprogramm gesteuert wird, bei welchem:
- in dem Speicher des Mikroprozessors ausgearbeitete Zugehörigkeitsfunktionen abgespeichert werden, die Zusammenhänge zwischen Meßdaten und Zugehörigkeitskoeffizienten dieser Meßdaten mit Meßbereichen herstellen,
- in dem Speicher des Mikroprozessors ausgearbeitete Steuerregelungen dieses Gerätes in Abhängigkeit von Werten der Zugehörigkeitskoeffizienten abgespeichert werden,
- Meßdaten, die von dem Fühler ausgegeben wurden, geholt werden,
- das Ergebnis der Steuerregelungen für die geholten Meßdaten berechnet wird,
- und das Gerät entsprechend gesteuert wird,
- wobei der Meßfühler und/oder das Gerät bei Defekt ausgetauscht wird,
dadurch gekennzeichnet, daß zum Steuern des elektronischen Systems nach der Änderung:
- man das System sich zwischen zwei identifizierten Funktionspunkten bewegen läßt,
- man die Meßdaten holt, die diesen zwei Punkten entsprechen,
- man Zugehörigkeitsfunktionen und/oder Änderungsregeln erarbeitet,
- und man die Zugehörigkeitsfunktionen und/oder gespeicherten Regeln in Abhängigkeit von diesen Änderungsregeln abändert.

2. Verfahren nach Anspruch 1, dadurch gekennzeichnet, daß
- man die Meßdaten, die den zwei Punkten entsprechen, an den Zentralprozessor übermittelt,
- der Zentralprozessor die Zugehörigkeitsfunktionen und/oder Änderungsregeln ausarbeitet,
- und der Zentralprozessor diese Zugehörigkeitsfunktionen und/oder Änderungsregeln an den Mikroprozessor weiterleitet.

3. Verfahren nach einem der Ansprüche 1 oder 2, dadurch gekennzeichnet, daß
- man den Mikroprozessor und seinen Speicher mit einem Programm zum Steuern des Gerätes in Abhängigkeit von von außen empfangenen Befehlen versieht, und
- man sich das System zwischen zwei Funktionspunkten mittels einer mit dem Mikroprozessor verbundenen Steuertastatur bewegen läßt.

4. Verfahren nach einem der Ansprüche 1 bis 3, dadurch gekennzeichnet, daß
- man den Mikroprozessor und seinen Speicher mit einem Programm zum Steuern des Gerätes in Abhängigkeit von von außen empfangenen Befehlen versieht, und
- man sich das System zwischen zwei Funktionspunkten mittels eines in dem Zentralprozessor abgespeicherten Programms bewegen läßt.

5. Verfahren nach einem der Ansprüche 1 bis 4, dadurch gekennzeichnet, daß
- man sich das System zwischen zwei Funktionsgrenzen bewegen läßt.

6. Verfahren nach einem der Ansprüche 1 bis 5, dadurch gekennzeichnet, daß
- man die Signale mehrerer Meßfühler aufnimmt.

7. Verfahren nach einem der Ansprüche 1 bis 6, dadurch gekennzeichnet, daß
- man die Meßfühler verdoppelt, um die Signale eines Meßfühlers in Abhängigkeit von Signalen eines anderen zu kalibrieren.

8. Verfahren nach einem der Ansprüche 1 bis 7, dadurch gekennzeichnet, daß
- man den Zentralprozessor mit dem Mikroprozessor über ein lokales Netz verbindet.

9. Verfahren nach einem der Ansprüche 1 bis 8, dadurch gekennzeichnet, daß
- man lokal die Regeln und Zugehörigkeitsfunktionen abändert.

## Claims

1. Method of managing an electronic system including a central processor, an appliance, a microprocessor and its memory, and at least one measurement sensor, the appliance being controlled by the microprocessor in accordance with a fuzzy logic program, in which
- membership functions establishing matches between measurement data and coefficients of membership of these measurement data of measurement ranges are produced and recorded in the memory of the microprocessor,
- there are prepared and recorded in the memory of the microprocessor control rules for the said appliance as a function of values of the said membership coefficients,
- measurement data delivered by the sensor are read,
- the result of the control rules are calculated for the measurement data read,
- and the said appliance is controlled accordingly,
- the measurement sensor and/or the appliance is changed when it is defective,
characterised in that, in order to regulate this electronic system after this change,
- the system is caused to change between two identified operating points,
- the measurement data corresponding to these two points are read,
- membership functions and/or modifying rules are produced,
- and the membership functions and/or the recorded rules are modified as a function of these modifying rules.

2. Method according to Claim 1, characterised in that
- the measurement data corresponding to the said two points are transmitted to the central processor,
- the central processor produces the membership functions and/or modifying rules,
- and the central processor transmits these membership functions and/or modifying rules to the microprocessor.

3. Method according to one of Claims 1 to 2, characterised in that
- the microprocessor and its memory are provided with a program for controlling the appliance as a function of instructions received from outside, and
- the system is caused to change between two operating points by means of a control keyboard connected to the microprocessor.

4. Method according to one of Claims 1 to 3, characterised in that
- the microprocessor and its memory are provided with a program for controlling the appliance as a function of instructions received from outside, and
- the system is caused to change between two operating points by means of a program recorded in the central processor.

5. Method according to one of Claims 1 to 4, characterised in that
- the system is caused to change between two operating limits.

6. Method according to one of Claims 1 to 5, characterised in that
- the signals from several sensors are read.

7. Method according to one of Claims 1 to 6, characterised in that
- the sensors are duplicated in order to calibrate the signals from one sensor as a function of the signals for another one.

8. Method according to one of Claims 1 to 7, characterised in that
- the central processor is connected to the microprocessor by means of a local network.

9. Method according to one of Claims 1 to 8, characterised in that
- the rules and membership functions are modified locally.
